# EUROPÄISCHE PATENTSCHRIFT

(11) **EP 4 559 554 B1**
(45) Veröffentlichungstag und Bekanntmachung des Hinweises auf die Patenterteilung: **29.04.2026**
(21) Anmeldenummer: 24215695.8
(22) Anmeldetag: 27.11.2024
(51) Int. Cl.: B01D 29/21, B01D 36/00, B01D 35/143

(54) **SICHERHEITS- UND IDENTIFIZIERUNGSVORRICHTUNG**
SECURITY AND IDENTIFICATION DEVICE
DISPOSITIF DE SÉCURITÉ ET D'IDENTIFICATION

(30) Priorität: 27.11.2023 DE 102023004872
(43) Veröffentlichungstag der Anmeldung: 28.05.2025
(73) Patentinhaber: HYDAC FluidCareCenter GmbH, 66280 Sulzbach/Saar (DE)
(72) Erfinder: Dewes, Markus, 66649 Oberthal (DE); Theobald, Sascha, 66763 Dillingen (DE)
(74) Vertreter: Bartels und Partner, Patentanwälte

(56) Entgegenhaltungen:
- DE-A1- 102014 010 497
- DE-A1- 102015 009 624
- US-A1- 2010 276 352

## Beschreibung

Die Erfindung betrifft eine Sicherheits- und Identifizierungsvorrichtung zum Verifizieren, ob ein qualifizierter Filterelementtyp mit seinen Filterelementen zu einer ihm zugeordneten Elementaufnahme zugehörig ist, mit den Merkmalen im Oberbegriff von Anspruch 1.

Durch DE 11 2012 002 607 T5 ist ein Fälschungssicherungsmechanismus für ein Filterelement zum spezifischen und vorzugsweise eindeutigen Identifizieren eines Filters mit einem Leiterbild oder einer Leiterbahn aus leitfähigen Materialien bekannt, das bzw. die bevorzugt entweder eingebettet unter der Oberfläche als Dünnfilmschaltung oder auf einem Abschnitt des Filters aufgeformt ist. Die leitfähigen Materialien sind an der Filterendkappe angeordnet, wobei der Widerstand des Filterelementes ein Identifizierungszeichen ist, das mit der Beschilderung durch den Ersthersteller, wie beispielsweise einer Produktnummer und/oder einer anderen Markierung der Komponente, assoziiert ist. Diese elektrische Widerstandssignatur gestattet die schnelle Identifizierung von gefälschten, in Umlauf befindlichen Filtern, die häufig von minderer Qualität sind.

Durch DE 11 2013 002 268 T5 ist eine Filterbaugruppe bekannt, die ein qualifiziertes Filterelement aufweist, das Kraftstoff filtert sowie ein Filtergehäuse für das qualifizierte Filterelement und einen Wasser-in-Kraftstoff-Sensor hat, der das Vorhandensein von Wasser im Filtergehäuse erkennt. Ein elektrischer Widerstand des Wasser-in-Kraftstoff-Sensors ändert sich auf der Grundlage dessen, ob das qualifizierte Filterelement im Gehäuse eingebaut ist, um dergestalt die Verwendung von Plagiaten ausschließen zu können.

Durch DE 11 2014 004 764 T5 ist ein elektronisches System bekannt, das eine einzigartige Identifizierung einer Originalfiltersystem-Baugruppe für eine Motorsteuereinheit bereitstellt. Dabei ist ein Widerstand derart zu einem integrierten Teil der Filtrationssystem-Hardware gemacht, dass, wenn er über eine verdrahtete Verbindung angeschlossen ist, die Motorsteuereinheit ein bestimmtes Spannungssignal erkennt und das System als einen Originalfilter identifiziert. Die Verbindung des Widerstandes kann über Stecker-Buchsenkontakte, leitfähige Drähte, Platten, leitfähigen Kunststoff oder andere geeignete Mechanismen hergestellt werden. Dahingehend elektronische Filtererkennungsfunktionen setzen auf das Ohmsche Gesetz durch Integrieren eines Widerstands in den Körper des Filters, wobei die widerstandsbasierte Filtererkennungsfunktion auf Kraftstoff-Wasser-Abscheider, Kraftstoff-/Öl-/Hydraulikfilter oder Patronenfiltermodule anwendbar ist.

Die DE 10 2015 009 624 A1 beschreibt eine Sicherheits- und Identifizierungsvorrichtung zum Verifizieren, ob ein qualifizierter Filterelementtyp mit seinen Filterelementen zu einer ihm zugeordneten Elementaufnahme zugehörig ist, mit den Merkmalen im Oberbegriff von Anspruch 1 mit einer elektrischen Kontaktierung zwischen Detektorteilen einer Detektoreinrichtung, von denen ein Detektorteil dem jeweiligen Filterelement eines Filterelementtyps zugehörig ist und das andere Detektorteil der Elementaufnahme, wobei für die Kontaktierung die beiden Detektorteile mittels einer axialen Verfahrbewegung zumindest teilweise in Überdeckung miteinander gebracht sind, wobei mittels mindestens eines Energiespeichers in elastisch nachgiebiger Weise die elektrische Kontaktierung zwischen den beiden Detektorteilen quer oder im Wesentlichen quer zu der axialen Verfahrbewegung in wieder lösbarer Weise hergestellt ist, und wobei die Kontaktierung unter Verwendung einer Codierung erfolgt, die in Zusammenwirken der beiden Detektorteile, mittels einer Auswerteeinrichtung decodiert, das Ergebnis der Zugehörigkeit oder Nicht-Zugehörigkeit liefert.

Die DE 10 2014 010 497 A1 betrifft einen Filter mit einer Heizeinrichtung für Fluid.

Die US 2010/0276352 A1 zeigt einen Kraftstofffilter mit einer Filtererkennung auf.

Ausgehend von diesem Stand der Technik liegt der Erfindung die Aufgabe zugrunde, die bekannten Lösungen weiter zu verbessern, insbesondere bei dahingehenden Sicherheits- und Identifizierungsvorrichtungen die Funktionssicherheit - auch bei robustem Betrieb - zu gewährleisten, bei vereinfachter Handhabung.

Eine dahingehende Aufgabe löst eine Filtervorrichtung mit den Merkmalen des Patentanspruches 1 in seiner Gesamtheit.

Gemäß dem Kennzeichen von Anspruch 1 ist vorgesehen, dass das eine dem jeweiligen Filterelement zugehörige Detektorteil aus einem, vorzugsweise umfangsseitig geschlossenen, Ring- oder Hülsenkörper besteht, der auf seiner Innenseite die Codierung aufweist, die im Funktions- oder Betriebszustand in federelastisch nachgiebigem Kontakt mit einer Außenseite des anderen Detektorteils der Elementaufnahme ist, das insoweit in das eine Detektorteil über dessen freie Stirnseite eingreift.

Dadurch, dass mittels mindestens eines Energiespeichers in elastisch nachgiebiger Weise die elektrische Kontaktierung zwischen den beiden Detektorteilen quer oder im Wesentlichen quer zu der axialen Verfahrbewegung in wieder lösbarer Weise hergestellt ist, erfolgt eine Kontaktierung in selbst zentrierender Weise über die beiden Detektorteile, was der Funktionssicherheit zugutekommt. Dergestalt geschieht die Kontaktierung quasi-automatisch und bei hergestellter Kontaktierung ist, über die radial miteinander kraftschlüssig in Anlage gebrachten Detektorteile unter der Wirkung des jeweiligen Energiespeichers eine definierte Signalübertragung hergestellt und die Detektorteile lassen sich mit geringem Betätigungsaufwand auch leicht wieder voneinander lösen respektive trennen. Gegenüber bekannten Lösungen mit axialer, stirnseitiger Kontaktierung der Detektorteile hat die radiale, elastische Kontaktanbindung den Vorteil, dass in weitem Umfang etwaige Toleranzfehler ohne Weiteres ausgleichbar sind, so dass auch ein etwaiger Winkelversatz zwischen den Detektorteilen respektive zwischen einem Filterelement und zugehöriger Filteraufnahme keine Rolle spielt.

Die angesprochene Detektoreinrichtung kann dazu verwendet werden, festzustellen, ob ein Filterelement seine Funktionsstellung im Filtergehäuse als der eigentlichen Filteraufnahme tatsächlich eingenommen hat. Dergestalt sind Fehlfunktionen, insbesondere beim Tauschen eines verbrauchten Filterelementes gegen ein Neuelement, durch Fehlbedienung vermieden. Insbesondere ist sichergestellt, dass nicht versehentlich die Filtervorrichtung respektive Elementaufnahme ganz ohne Filterelement betrieben werden kann. Dergestalt sind auch Folgeschäden vermeidbar, die dadurch entstehen können, dass bei Fehlen des Filterelementes im Filtergehäuse der Filtervorrichtung ungereinigtes, insbesondere verschmutztes, Fluid in einen Fluidkreislauf gelangen kann, an dem die Filtervorrichtung in üblicher Weise angeschlossen ist. Auch lässt sich dergestalt unter Einbezug einer geeigneten Auswerteeinrichtung sicherstellen, dass nicht ungewollt Plagiat-Filterelemente eingewechselt werden, die regelmäßig nicht den Qualitätsanforderungen genügen, wie sie eben für Original-Filterelemente des originären Herstellers durch diesen garantiert sind.

Die Kontaktierung erfolgt unter Verwendung einer Codierung, die in Zusammenwirken der beiden Detektorteile mittels der Auswerteeinrichtung decodiert das Ergebnis der Zugehörigkeit oder Nicht-Zugehörigkeit liefert.

Die angesprochene Codierung kann bevorzugt unterschiedliche elektrische Widerstände zwischen den Detektorteilen aufweisen, so dass für jeden Filterelementtyp als zugehörige Codierung ein elektrischer Widerstandsbereich mit vorzugsweise definiert vorgegebenen Eckwerten vorgegeben ist. Dergestalt ist es möglich, einem Abnehmer von Filterelementen eines Filterelementtyps eine spezielle Codierung mit Widerstandswerten zuzuweisen und mindestens einem weiteren anderen Nutzer des gleichen Filterelementtyps mit den zugehörigen Filterelementen eine andere Codierung zu geben, so dass sichergestellt ist, dass jeder Nutzer auch nur die für ihn spezifisch vorgesehenen Filterelemente eines Typs in seinen Maschinen oder Motoren verwenden kann. Dies hat so keine Entsprechung im Stand der Technik und dergestalt lassen sich etwaige Reklamationen von Kunden besser in den Griff bekommen, weil man genau weiß, welche Herstellcharge eben bei welchem Abnehmer zur Verwendung gekommen ist.

Das eine dem jeweiligen Filterelement zugehörige Detektorteil besteht aus einem, vorzugsweise umfangsseitig geschlossenen, Ring- oder Hülsenkörper, der auf seiner Innenseite die Codierung aufweist, die im Funktions- oder Betriebszustand in federelastisch nachgiebigem Kontakt mit einer Außenseite des anderen Detektorteils der Elementaufnahme ist, das insoweit in das eine Detektorteil über dessen freie Stirnseite eingreift. Vorzugsweise ist dabei weiter vorgesehen, dass die Innenseite des Ring- oder Hülsenkörpers als dem einen Detektorteil unterschiedlich leitfähige Materialien aufweist, zwecks Realisieren unterschiedlicher elektrischer Widerstände im Rahmen der Codierung. Dergestalt ist die hergestellte Kontaktierung über die Detektorteile der Detektoreinrichtung von dem Ring- oder Hülsenkörper geschützt und etwa in der bekannten Dünnschichttechnik auf der Innenseite des dahingehenden Körpers angebrachte Codierelemente sind vor etwaigen Beschädigungen geschützt, was einem lang andauernden Betrieb zugutekommt.

Fluidfilter können sich im Hinblick auf ihre Leistungsmerkmale deutlich voneinander unterscheiden und die wichtigsten Leistungsmerkmale sind unter anderem:
- hohe Partikelabscheidung,
- hohe Partikelabscheidung über einen weiten Differenzdruckbereich,
- hohe Schmutzaufnahmekapazität,
- hoher Kollaps-Berstdruck,
- niedriger Anfangsdifferenzdruck,
- gute Durchflussermüdungsfestigkeit, und
- gute Wasseraufnahmekapazität bei wasserabsorbierendem Filtermaterial.

Auch ist das jeweilige Filtermaterial für das Filtermedium danach auszuwählen, welches Fluid mit dem Element zu behandeln ist. Neben Kraftstoffen jedweder Art, werden regelmäßig Hydraulikmedien ebenso gefiltert, wie chemisch aggressive Flüssigkeiten, technische Gase etc. Mit der Sicherheits- und Identifizierungsvorrichtung ist es insoweit also nicht nur möglich, einen Plagiatschutz sicherzustellen, sondern vielmehr kann man auch feststellen, vorzugsweise unter Einsatz der Auswerteeinrichtung, ob das eingewechselte Filterelement auch der jeweiligen Filtrationsaufgabe gerecht wird.

Insbesondere kann dabei vorgesehen sein, dass die beiden Detektorteile der Detektoreinrichtung in Kontakt miteinander gebracht, die eingenommene Funktionsstellung des jeweiligen Filterelementes im Filtergehäuse an eine entsprechende Auswerteeinrichtung signalisieren, regelmäßig in Form eines Steuergerätes, das sicherstellt, dass ein fluidischer Kreis nicht in Betrieb genommen werden kann, wenn das Filterelement in das Filtergehäuse nicht eingesetzt ist und/oder nicht das qualifizierte Filterelement eines Filterelementtyps verwendet werden soll. Insbesondere kann die Auswerteeinrichtung aus einem sogenannten Motorsteuergerät (ECU) bestehen, das eine zugehörige Verbrennungskraftmaschine, wie einen Dieselmotor, außer Betrieb setzt, wenn ein Filterelement nicht eingesetzt ist oder wenn ein nicht qualifiziertes Filterelement zum Einsatz kommen sollte, das nicht vom Originalhersteller stammt und mit seiner Codierung nicht für einen bestimmten Abnehmer oder eine Abnehmergruppe freigegeben ist.

Das eine Detektorteil, das dem jeweiligen Filterelement zuordenbar ist, kann beispielhaft aus einem Kunststoffmaterial bestehen, bei dem sich durch Zugabe von Zusatzstoffen und/oder bei dem durch das Aufbringen von Beschichtungswerkstoffen unterschiedliche Leitfähigkeiten respektive elektrische Widerstände und damit unterschiedliche Codierungen vorgeben lassen. Vorzugsweise ist dabei vorgesehen, dass das eine dem jeweiligen Filterelement zugehörige Detektorteil aus einem, vorzugsweise umfangsseitig geschlossenen, Ring- oder Hülsenkörper besteht, der auf seiner Innenseite die Codierung aufweist, die im Funktions- oder Betriebszustand in federelastisch nachgiebigem Kontakt mit einer Außenseite des anderen Detektorteils der Elementaufnahme ist, das insoweit in das eine Detektorteil über dessen freie Stirnseite eingreift. Ferner ist bevorzugt vorgesehen, dass die Innenseite des Ring- oder Hülsenkörpers als dem einen Detektorteil unterschiedlich leitfähige Materialien aufweist zwecks Realisieren unterschiedlicher elektrischer Widerstände im Rahmen der Codierung.

Bei einer weiteren besonders bevorzugten Ausführungsform der erfindungsgemäßen Sicherheits- und Identifizierungsvorrichtung ist vorgesehen, dass das andere Detektorteil der Filterelementaufnahme mindestens einen, vorzugsweise zwei, elektrisch leitfähige Kontaktbügel aufweist, die jeweils als Energiespeicher konzipiert federelastisch nachgiebig ausgebildet sind und im Funktions- oder Betriebszustand zumindest punktuell in radialem Kontakt mit der Innenseite des Ring- oder Hülsenkörpers sind. Dabei wird an die angesprochenen leitfähigen Kontaktbügel eine voneinander verschiedene elektrische Spannung angelegt oder nur einer der Kontaktbügel über entsprechend voneinander getrennte Leiterbahnen entsprechend bestromt, so dass bei Kontaktierung mit dem anderen Detektorteil der Elementaufnahme ein mittels der Auswerteeinrichtung auswertbarer elektrischer Strom fließt, der den Nachweis dafür liefert, dass das richtige Filterelement am richtigen Ort im Filtergehäuse respektive an der Elementaufnahme betriebsbereit aufgenommen ist. Der jeweilige Kontaktbügel ist dabei als Federelement ausgebildet und bildet insoweit den Energiespeicher aus, mit dessen Hilfe die berührende Kontaktfläche zum anderen Detektorteil herstellbar ist.

Bei einer weiteren bevorzugten Ausführungsform der erfindungsgemäßen Sicherheits- und Identifizierungsvorrichtung ist vorgesehen, dass das der Filteraufnahme zugehörige Detektorteil mittels einer Halterung elektrisch isoliert ist, die zusätzlich mindestens eine weitere Detektoreinrichtung aufnimmt, wie einen Füllstandssensor. Insbesondere im Rahmen der Dieselfiltration kann bodenseitig der Filtervorrichtung aus dem Diesel abgeschiedenes Wasser anfallen, das bei entsprechendem Füllstand im Filtergehäuse im Betrieb die elektrisch leitfähigen Kontaktbügel kurzschließen könnte, mit der Folge eines Ausfalls der Anlage, wobei die Auswerteeinrichtung fälschlich auch die Aufnahme des Filterelementes in seiner Funktions- oder Aufnahmeposition in einem Filtergehäuse anzeigen könnte. Demgemäß liegt vorzugsweise der Füllstandssensor bezogen auf eine maximal mögliche Fluid-Füllstandshöhe im Filtergehäuse unterhalb der Detektoreinrichtung, so dass vor Erreichen dieser vorgebbaren Füllstandshöhe ausschließlich der Füllstandssensor mit seinen beiden Kontakten, vorzugsweise in Form zweier voneinander beabstandeter, metallischer Pins anspricht, die rechtzeitig das Vorhandensein von Wasser anzeigen, bevor dieses in störenden Kontakt mit dem jeweiligen Detektor- oder Kontaktteil der Vorrichtung kommen kann. Dergestalt sind Fehlfunktionen im Betrieb ausgeschlossen. Beim Ansprechen des Füllstandssensors verhindert dieser vergleichbar dem Positionssensor für das Filterelement mittels der Detektoreinrichtung die Inbetriebnahme eines fluidischen Kreislaufsystems. Insbesondere würde im dahingehenden Fall ein Dieselmotor erst gar nicht gestartet werden können.

Bei einer weiteren bevorzugten Ausführungsform der erfindungsgemäßen Sicherheits- und Identifizierungsvorrichtung ist vorgesehen, dass das eine dem jeweiligen Filterelement zugehörige Detektorteil ein eigenständiges, vom jeweiligen Filterelement eines Filterelementtyps unabhängiges Bauteil darstellt, das separat handhabbar ist oder einen integralen Bestandteil des jeweiligen Filterelementes eines Filterelementtyps ausbildet. Dergestalt kann ein ring- oder hülsenförmiges Detektorteil, das für einen Filterelementtyp ausgelegt ist, bleibend in der Filterelementaufnahme festgelegt werden, so dass nachfolgend die Filterelemente dieses Typs für einen Betrieb einwechselbar sind. Vorzugsweise ist jedoch vorgesehen, dass dieses Detektorteil als einstückiger Bestandteil der unteren Elementkappe des Filterelementes immer zusammen mit diesem eingesetzt und ausgetauscht wird.

Vorzugsweise ist dahingehend ein Filterelement mit einem filternden Elementmaterial geschaffen, das sich zwischen zwei Endkappen erstreckt und als handelbare Baueinheit konzipiert ist, wobei die Sicherheits- und Identifizierungsvorrichtung, wie vorgestellt, integraler Bestandteil des Filterelementes ist. Besonders bevorzugt ist dabei vorgesehen, dass das eine Detektorteil mit seinem Ring- oder Hülsenkörper und innenliegender Codierung Bestandteil einer Endkappe des jeweiligen Filterelementes eines Elementtyps ist.

Bevorzugt kann auch ein verkaufsfähiges Set gebildet sein, zumindest bestehend aus mindestens einem qualifizierten Filterelement eines vorgebbaren Filterelementtyps und einem ein eigenständiges, vom Filterelement unabhängiges Bauteil bildendes Detektorteil, das dem jeweiligen Filterelement zugeordnet ring- oder hülsenförmig ausgebildet eine Codierung trägt und dabei koppelbarer Bestandteil mit einer Sicherheits- und Identifizierungsvorrichtung, wie vorstehend vorgestellt, ist.

Beispielhaft kann dahingehend ein Set aus mehreren qualifizierten Filterelementen eines Filterelementtyps gebildet sein zusammen mit einem Detektorteil mit Codierung, insbesondere in Form eines Ring- oder Hülsenkörpers mit auf- oder angebrachter Codierung, der zusammen mit den Filterelementen den Lieferanteil bildet. Dergestalt kann dann in einem ersten Schritt durch Anbringen des einen Detektor- oder Codierteils an der Elementaufnahme mit seinem Detektorteil die Inbetriebnahme der Filtervorrichtung sichergestellt werden, indem die Auswerteeinrichtung eben die Zugehörigkeit der in Eingriff miteinander befindlichen Detektorteile erkennt und dahingehend der Betrieb sichergestellt ist, können dann die mitgelieferten qualifizierten Filterelemente den Filterbetrieb aufnehmen. Dergestalt lässt sich das eine Codier- oder Detektorteil fortlaufend verwenden, wobei dann nur die Filterelemente gegen Neuelemente eines Typs zu tauschen sind, was Kosten sparen hilft.

**Im** Folgenden wird die erfindungsgemäße Sicherheits- und Identifizierungsvorrichtung anhand eines Ausführungsbeispiels nach der Zeichnung näher erläutert, und zwar anhand einer Filtervorrichtung nebst Filterelement. Dabei zeigen in prinzipieller und nicht maßstäblicher Darstellung die
- Fig. 1: in der Art eines Längsschnittes die wesentlichen Komponenten der Filtervorrichtung, bei der ein Filterelement in einem Filtergehäuse aufgenommen ist mit in Eingriff miteinander befindlichen Detektorteilen; und
- Fig. 2: eine der Fig. 1 entsprechende Darstellung eines unteren Bildausschnitts, der das Einsetzen oder die Herausnahme eines Filterelementes ohne Eingriff der Detektorteile miteinander zeigt.

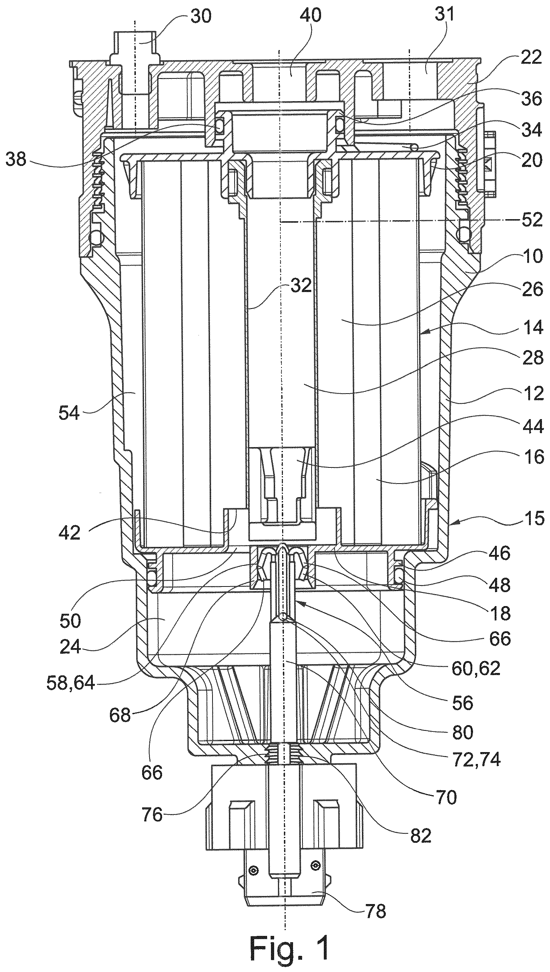

Die Fig. 1 zeigt in einer vertikal orientierten, üblichen Betriebsstellung ein Ausführungsbeispiel der Erfindung in Form eines Kraftstofffilters für mit Wasser beladenen Dieselkraftstoff, mit einem Filtergehäuse 10 mit einem im Großen und Ganzen hohlzylindrischen Gehäusehauptteil 12 als einer Elementaufnahme 18 für die Aufnahme eines tauschbaren, als Ganzes mit 14 bezeichneten Filterelementes. Das Filterelement 14 mit seinem mehrlagigen Elementmaterial 16, das das Filtermedium bildet und das sich zwischen zwei Endkappen 18, 20 erstreckt, bildet die wesentlichen Bestandteile des Filters aus. In Blickrichtung auf die Fig. 1 gesehen, ist das Gehäusehauptteil 12 am oberen Ende durch ein aufgeschraubtes Deckelteil 22 nach außen zur Umgebung hin dichtend abgeschlossen. Des Weiteren verjüngt sich das Hauptteil 12 in Richtung seines unteren Endes in Stufen, wobei der sich hieraus ergebende untere Abschnitt als Wassersammelraum 24 konzipiert ist. Das Elementmaterial 16 respektive das Filtermedium kann von außen nach innen von Fluid durchströmt sein und weist auf seiner Innenseite ein zylindrisches Stützrohr 26 auf, das mit nicht näher dargestellten Fluiddurchlässen versehen ist, um dergestalt einen Fluiddurchtritt in den Innenraum 28 des Filterelementes 14 zu ermöglichen. Das Deckelteil 22 weist ferner am oberen äußeren Rand in üblicher Weise eine Entlüftungsschraube 30 auf.

Die Fluideintrittsstelle 31 in das Gehäusehauptteil 12 für die Zufuhr des Unfiltratstroms ist in einem Randbereich des Deckelteils 22 in dieses eingebracht. Auf der Innenseite des Stützrohres 26 ist ein rohrförmiges Siebgewebe 32 vorgesehen, das in Fluidströmungsrichtung gesehen dem Elementmaterial 16 in Form des Filtermediums nachfolgt und von diesem radial räumlich separiert eine Trennstufe ausbildet. Sowohl das Filterelement 14 als auch das Siebgewebe 32 sind jeweils endseitig in einer Endkappe aufgenommen, und zwar in einer unteren Endkappe 18 und einer oberen Endkappe 20, so dass insoweit ein tauschbarer Filter entsteht, der mittels einer an ihm angeordneten hochklappbaren, bügelförmigen Handhabe 34 aus dem Hauptteil 12 von Hand herausgenommen werden kann, sofern das Deckelteil 22 vom Hauptteil 12 abgeschraubt ist. Insbesondere im Verbrauchsfall, bei dem das Elementmaterial 16 von Partikelverschmutzung zugesetzt ist, lässt sich dergestalt ein Altelement gegen ein unverbrauchtes Neuelement tauschen. In Blickrichtung auf die Fig. 1 gesehen, weist die obere Endkappe 20 einen ringförmigen Vorsprung 36 auf, der in eine entsprechende Auskragung im Deckelteil 22, die nach unten vorsteht, mittels eines O-Ringes 38 abgedichtet eingreift.

Das von partikulären Verschmutzungen abgereinigte Fluid, insbesondere in Form von Dieselkraftstoff, verlässt das Filterelement 14 auf seiner Innenseite respektive über den Innenraum 28, durchquert die Sieböffnungen im Siebgewebe 32 und wird dann über den Innenraum 28 in Blickrichtung auf die Fig. 1 gesehen nach oben hin aus dem Filtergehäuse 10 abgeführt. Die Auslassöffnung 40, die sich im Deckelteil 22 befindet, schließt sich insoweit fluidführend an den ringförmigen Vorsprung 36 der oberen Endkappe 20 an.

Sofern sich in dem Fluidstrom, der das Filterelement 14 von außen nach innen durchströmt, Wasser befindet, wird dieses mittels des Elementmaterials 16 zu größeren Wassertropfen koalesziert, und das dahingehende Wasser gelangt nach Durchqueren des Stützrohres 26 in einen Zwischenraum 42 zwischen der Innenumfangsseite des Stützrohres 26 und der Außenumfangsseite des rohrförmigen Siebgewebes 32. Das insoweit vorzugsweise hydrophob ausgebildete Siebgewebe 32 verstärkt weiter die Tropfenbildung und sorgt dafür, dass das mittels des Filtermediums 16 koaleszierte Wasser auf der Oberseite des Siebgewebes 32 schwerkraftbedingt nach unten in den jeweiligen Abschnitt, der als Wassersammelraum 24 dient, einfließen kann. Damit der abgereinigte Filtratstrom über den Innenraum 28 nach oben über die Auslassöffnung 40 abströmen kann, ist der Innenraum 28 in Blickrichtung auf die Fig. 1 gesehen nach unten hin von einem Verschlussstopfen 44 verschlossen.

Wie die Fig. 1 weiter zeigt, ist die untere Endkappe 18 gleichermaßen mit einem weiteren ringförmigen Vorsprung 46 mittels eines O-Dichtringes 48 in abgedichteter Weise auf der Innenwandseite des Gehäusehauptteils 12 im Bereich oberhalb des Wassersammelraumes 24 geführt. Damit das koaleszierte, abgeschiedene Wasser in den Wassersammelraum 24 ungestört gelangen kann, ist in die untere Endkappe 18 mindestens eine Durchlassöffnung 50 eingebracht, wobei vorzugsweise mehrere Durchlassöffnungen 50, radial voneinander beabstandet sich koaxial um die Längsachse 52 der Filtervorrichtung in der unteren Endkappe 18 erstrecken, was nicht näher dargestellt ist. Um eine gute Fluidverteilung entlang des Außenumfanges des Elementmaterials 16 zu ermöglichen, ist zwischen der Innenwandseite des Gehäusehauptteils 12 und der Außenseite des Elementmaterials 16 ein umlaufender Eintrittsraum 54 gebildet für die Aufnahme des regelmäßig mit Verschmutzungen beladenen und mit Kondensat respektive Wasser versehenen Fluids, wie Dieselkraftstoff, das über den Eintritt 31 zugeführt wird. Das fluiddurchlässige Stützrohr 26 kann gleichfalls in der Art einer Siebstruktur ausgebildet sein, wobei zwischen den Siebflächen ringförmige Querrippen verlaufen, was nicht näher dargestellt ist. Dergestalt ist eine besonders ausgesteifte Stützstruktur für das Elementmaterial 16 des Filterelementes 14 erreicht, so dass sich die in der Fig. 1 als Ganzes gezeigte Filtervorrichtung mit seinem Filtergehäuse 10 und dem darin aufgenommenen Filterelement 14 auch bei hohen Fluiddrücken betreiben lässt. Eine dahingehende Filtervorrichtung kann regelmäßig als sogenannter Vorfilter dienen, der zwischen dem Kraftfahrzeugtank und einer Vorförderpumpe angeordnet ist, die das eigentliche Common-Rail-System mit Dieselkraftstoff aus dem Tank versorgt.

Wie bereits ausgeführt, dient das Elementmaterial 16 sowohl der Partikelabreinigung als auch der Koaleszenz von Wasser, das zusammen mit den Partikeln in einem das Elementmaterial 16 durchströmenden Fluid mitgeführt ist. Dabei kann das Elementmaterial zusätzlich mit einem antimikrobiellen Wirkstoff versehen sein, um die eingangs beschriebene "Dieselpest" zu vermeiden.

Die erfindungsgemäße Filtervorrichtung weist weiter eine als Ganzes mit 56 bezeichnete Detektoreinrichtung auf, mittels der feststellbar ist, ob ein qualifiziertes Filterelement 14 seine Funktionsstellung im Filtergehäuse 10 tatsächlich eingenommen hat, wie dies Gegenstand der Darstellung nach der Fig. 1 ist. Die Detektoreinrichtung 56 weist zwei Detektorteile 58, 60 auf, von denen das eine 58 dem Filterelement 14 und das andere dem Filtergehäuse 10 zugehörig ist. Sind die beiden Detektorteile 58, 60, wie in Fig. 1 dargestellt, in Kontakt miteinander gebracht, kann die damit einhergehende Betriebs- oder Funktionsstellung des Filterelementes 14 an eine nicht näher dargestellte Auswerteeinrichtung signalisiert werden, beispielsweise in Form eines Motorsteuergerätes (ECU).

Für die Kontaktierung ist das Detektorteil 58 des Filterelementes 14 mit dem Detektorteil 60 des Filtergehäuses 10 in wieder lösbaren Eingriff bringbar. Insbesondere weist das Detektorteil 60 des Filtergehäuses 10 ein elektrisch leitfähiges Kontaktteil 62 auf, das eine elektrische Verbindung mit einem elektrisch leitfähigen Kontaktteil 64 des Filterelementes 14 als dem einem Detektorteil 58 in seiner Funktionsstellung herstellt.

Das eine Kontaktteil 64 des Filterelementes 14 kann jeweils aus unterschiedlich leitfähigen Materialien aufgebaut sein, um dergestalt spezifisch ausgestaltete Filterelemente zu detektieren, die an eine spezielle Filtrationsaufgabe sinnfällig angepasst sind. Das Kontaktteil 64 des Filterelementes 14 kann in der unteren Endkappe 18 desselben integriert sein, die aus mindestens einem Kunststoffmaterial besteht, bei dem durch Zugabe von Zusatzstoffen und/oder bei dem durch das Aufbringen von Beschichtungswerkstoffen sich unterschiedliche Leitfähigkeiten respektive elektrische Widerstände vorgeben lassen.

Das Kontaktteil 62 des Filtergehäuses 10 weist zwei elektrisch leitfähige Kontaktbügel 66 auf, die als Energiespeicher in der Art einer Druck- oder Bügelfeder konzipiert, in vorzugsweise federnde Anlage gebracht, in der Funktionsstellung in Anlage sind mit einem zumindest teilweise elektrisch leitfähig ausgebildeten Ring- oder Hülsenkörper 68, im Folgenden kurz als Hülse 68 bezeichnet, die das andere Kontaktteil 64 respektive das eine Detektorteil 58 des Filterelementes 14 bildet. Das Kontaktteil 62 des Filtergehäuses 10 ist mittels einer stabartigen Halterung 70 gegenüber der Umgebung elektrisch isoliert und die Halterung 70 nimmt zusätzlich mindestens eine weitere Detektoreinrichtung 72 auf, wie einen sogenannten Füllstandssensor 74. Die beiden federnden Kontaktbügel 66, als Druck- oder Bügelfeder konzipiert und damit als Energiespeicher ausgebildet, springen in Form von metallischen, voneinander isolierten Kontakten an der oberen freien Stirnseite der Hülse 68 hervor und sind dann wiederum in Richtung der Halterung 70 um jeweils etwa 180° nach unten hin umgelegt, so dass sie dergestalt in federnden, kraftschlüssigen Eingriff mit der Innenumfangsseite der Hülse 68 kommen können, die hohlzylindrisch ausgebildet konzentrisch zur Längsachse 52 der Vorrichtung als einstückiger Bestandteil der unteren Endkappe 18 angeordnet ist. Die Hülse 68 ist entlang ihrer hohlzylindrischen Innenseite 73 leitfähig ausgebildet und insoweit wird leitfähiges Kunststoffmaterial in diesem Bereich eingesetzt oder es wird ein entsprechend leitfähiger Beschichtungswerkstoff auf die Innenumfangsseite der Hülse 68 aufgetragen. Auch besteht die Möglichkeit, die Hülse 68 leitfähig zu machen, in dem man entlang ihrer hohlzylindrischen Innenwand 73 einen leitfähigen, insbesondere metallischen, Körper einsetzt, wie beispielsweise eine Metallhülse oder einen umlaufenden, ringförmigen Metalldraht (beides nicht dargestellt).

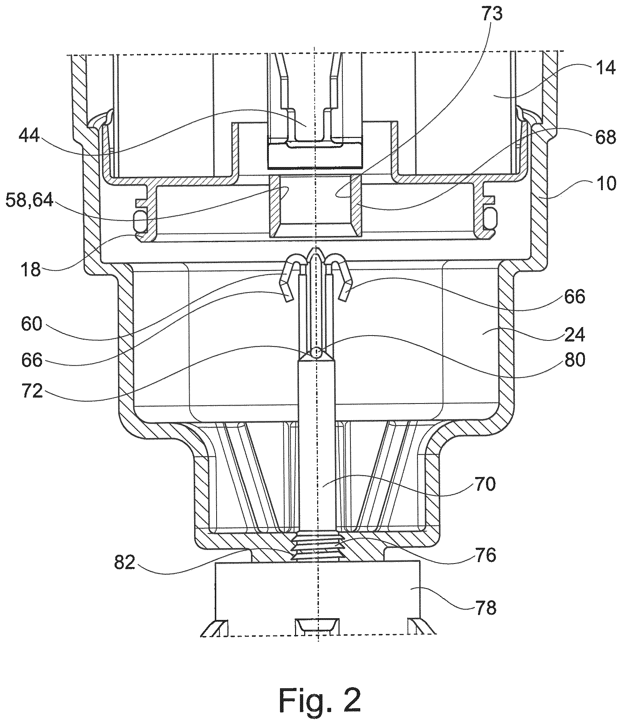

Die beiden Kontaktbügel 66 weisen in ihrem nach unten hin umgelenkten Bereich in etwa mittig jeweils eine nach außen vorspringende Knickstelle auf, die auf einem fiktiven Außendurchmesser liegt, der größer ist als der Außendurchmesser der Halterung 70 und größer ist als der Innendurchmesser der Hülse 68, sofern das Filterelement 14 sich nicht in seiner Funktionsposition im Filtergehäuse 10 befindet, was in der Fig. 2 dargestellt ist. Gleitet jedoch die Hülse 68 entlang ihrer Innenwand auf die Kontaktbügel 66 auf, indem das Filterelement 14 von oben her in seine Funktionsposition im Filtergehäuse 10 gelangt, werden die Kontaktbügel 66 über ihre Knickstelle federelastisch etwas zusammengedrückt und kommen dann entlang ihrer Knickstelle in kontaktierende, punkt- oder linienförmige Anlage mit der Innenwand der Hülse 68. Der Innendurchmesser der Hülse 68 entspricht dann dem fiktiven Außendurchmesser des Detektorteils 58 im Bereich der Knickstellen.

Die stabförmige Halterung 70 ist von unten her über eine Schraubverbindung 76 in das untere Ende des Gehäusehauptteiles 12 eingeschraubt und nach unten vorstehend mit einem elektrischen Steckeranschlussteil 78 üblicher Bauart versehen. Über das Steckeranschlussteil 78 ist das Detektorteil 60 des Filtergehäuses 10 an die nicht näher dargestellte Auswerteeinrichtung (ECU) angeschlossen sowie mit einer Strom- oder Spannungsquelle (nicht dargestellt) stromführend verbunden. Kommt es in der gezeigten Eingriffsstellung nach der Fig. 1 zu einem elektrischen Kontakt zwischen den beiden Kontaktbügeln 66 über den leitfähigen Teil am Innenumfang der Hülse 68 respektive über Teile der unteren Endkappe 18, spricht die Auswerteeinrichtung an und meldet, dass das Filterelement 14 innerhalb des Filtergehäuses 10 seine Betriebsstellung eingenommen hat. Ist kein Filterelement 14 eingesetzt oder in einer Transitposition bei einer Elemententnahme oder einem erneuten Einsetzen, wie in Fig. 2 dargestellt, kommt das Detektorteil 60 außer Eingriff mit dem Detektorteil 58 und zeigt über die Auswerteeinrichtung dann an, dass kein Strom zwischen den Kontaktbügeln 66 fließt oder keine Spannung herrscht, so dass insoweit die Filtervorrichtung auch nicht in Betrieb genommen werden kann. Filterelemente, die auf ihrer Seite über kein entsprechendes Detektorteil verfügen, können dann als Plagiatelement erkannt werden; auch besteht die Möglichkeit, durch entsprechendes "Eichen" der Detektoreinrichtung 56 zu gewährleisten, dass immer in Abhängigkeit von der jeweils anstehenden Filtrationsaufgabe auch das geeignete Filterelement 14 in der Filtervorrichtung innerhalb des Filtergehäuses 10 zum Einsatz kommt.

Etwas unterhalb der Detektoreinrichtung 56 ragt in den Wassersammelraum 24 noch der Flüssigkeitsstandssensor oder Füllstandssensor 74 hinein, der das jeweilige Fluidniveau im Wassersammelraum 24 überwachen kann, und bei einer entsprechenden Füllstandsmenge wird eine Bedienperson veranlasst, das Wasser aus dem Wassersammelraum 24 abzulassen, wobei dieser Vorgang auch mittels eines ansteuerbaren Ventiles (nicht dargestellt) automatisiert erfolgen kann. Anstelle eines Füllstandssensors 74 kann auch eine Überwachung der Wasser-Niveaulage durch optische Betrachtung erfolgen, wobei es dann vorteilhaft ist, die unteren Abschnitte des Gehäusehauptteils 12 im Bereich des Wasserssammelraumes 24 durchsichtig zu gestalten, beispielsweise indem zumindest teilweise entsprechende Abschnitte aus einem durchsichtigen Kunststoffkörper bestehen.

Bei der Ausführungsform nach der Fig. 1 wird jedoch ein Füllstandssensor 74 vorgesehen, der diametral zur Längsachse 52 einander gegenüberliegend zwei metallische Detektorpins 80 aufweist, von denen in den Figuren nur der vordere zu sehen ist. Spricht der dahingehende Füllstandssensor 74 an, sprich die Pins 80 kommen in leitenden Kontakt mit dem Wasser, geben diese Signal und veranlassen, dass der Wassersammelraum 24 von Flüssigkeit geleert wird. Hierzu wird über das Steckeranschlussteil 78 und über die zugehörige Schraubverbindung 76, die Halterung 70 mit den beiden Detektoreinrichtungen 56 und 72 aus dem Gehäusehauptteil 12 herausgeschraubt, so dass nach unten hin eine Entleeröffnung 82 freigegeben ist, über die das Wasser nach außen treten kann, das partiell mit Dieselkraftstoff verschmutzt in einem nicht näher dargestellten Behälter für die spätere Entsorgung aufgefangen wird. Nach Entleeren des Wassersammelraumes 24 lässt sich dann die genannte Anordnung wieder in ihre Ausgangsposition nach den Figuren in das Gehäusehauptteil 12 einschrauben. Dank des Füllstandssensors 74 lässt sich dergestalt sicherstellen, dass nicht ungewollt die Kontaktbügel 66 des anderen Detektorteiles 60 mit dem Wasser in Berührung kommen, was ansonsten zu einem Kurzschluss führen könnte oder zu Fehlinterpretationen führt, was die Positionierung des Filterelementes 14 im Filtergehäuse 10 anbelangt.

Wird gemäß der Darstellung nach der Fig. 2 das Filterelement 14 von oben her in das Filtergehäuse 10 eingesetzt, erlaubt die zylindrische Hülse 68 ein zentriertes Auffahren auf die beiden Kontaktbügel 66, so dass ein hemmnisfreier Aufsetzvorgang ermöglicht ist.

Letztendlich kann ein Original-Filterelement daran erkannt werden, dass ein Strom- bzw. Spannungsabfall innerhalb eines vorgebbaren zulässigen Bereiches liegt, der insoweit vorab für das jeweilige Filterelementes 14 definiert worden ist. Bei Fremd- oder Plagiatelementen liegt ein solcher Strom- bzw. Spannungsabfall regelmäßig außerhalb des zulässigen Bereiches, welcher eben vorab mit seinen Eckwerten definiert wurde, und es kommt zu einer Fehlermeldung, dass in unzulässiger Weise ein Fremdelement verbaut worden ist bzw. dass eben gar kein Element 14 sich im Gehäuse 10 befindet.

## Patentansprüche

1. Sicherheits- und Identifizierungsvorrichtung zum Verifizieren, ob ein qualifizierter Filterelementtyp mit seinen Filterelementen (14) zu einer ihm zugeordneten Elementaufnahme (15) zugehörig ist, mit einer elektrischen Kontaktierung zwischen Detektorteilen (58, 60) einer Detektoreinrichtung (56), von denen ein Detektorteil (58) dem jeweiligen Filterelement (14) eines Filterelementtyps zugehörig ist und das andere Detektorteil (60) der Elementaufnahme (15), wobei für die Kontaktierung die beiden Detektorteile (58, 60) mittels einer axialen Verfahrbewegung zumindest teilweise in Überdeckung miteinander gebracht sind, wobei mittels mindestens eines Energiespeichers in elastisch nachgiebiger Weise die elektrische Kontaktierung zwischen den beiden Detektorteilen (58, 60) quer oder im Wesentlichen quer zu der axialen Verfahrbewegung in wieder lösbarer Weise hergestellt ist, und wobei die Kontaktierung unter Verwendung einer Codierung erfolgt, die in Zusammenwirken der beiden Detektorteile (58, 60), mittels einer Auswerteeinrichtung decodiert, das Ergebnis der Zugehörigkeit oder Nicht-Zugehörigkeit liefert, **dadurch gekennzeichnet, dass** das eine dem jeweiligen Filterelement (14) zugehörige Detektorteil (58) aus einem, vorzugsweise umfangsseitig geschlossenen, Ring- oder Hülsenkörper (68) besteht, der auf seiner Innenseite (73) die Codierung aufweist, die im Funktions- oder Betriebszustand in federelastisch nachgiebigem Kontakt mit einer Außenseite des anderen Detektorteils (60) der Elementaufnahme (15) ist, das insoweit in das eine Detektorteil (58) über dessen freie Stirnseite eingreift.

2. Sicherheits- und Identifizierungsvorrichtung nach Anspruch 1, **dadurch gekennzeichnet, dass** für die Codierung unterschiedliche elektrische Widerstände zwischen den Detektorteilen (58, 60) eingesetzt sind.

3. Sicherheits- und Identifizierungsvorrichtung nach Anspruch 1 oder 2, **dadurch gekennzeichnet, dass** für jeden Filterelementtyp als zugehörige Codierung ein elektrischer Widerstandsbereich, mit vorzugsweise definiert vorgegebenen Eckwerten, vorgegeben ist.

4. Sicherheits- und Identifizierungsvorrichtung nach einem der vorstehenden Ansprüche, **dadurch gekennzeichnet, dass** die Innenseite (73) des Ring- oder Hülsenkörpers (68) als dem einen Detektorteil (58) unterschiedlich leitfähige Materialien aufweist, zwecks Realisieren unterschiedlicher elektrischer Widerstände im Rahmen der Codierung.

5. Sicherheits- und Identifizierungsvorrichtung nach Anspruch 4, **dadurch gekennzeichnet, dass** das andere Detektorteil (60) der Filterelementaufnahme (15) mindestens einen, vorzugsweise zwei, elektrisch leitfähigen Kontaktbügel (66) aufweist, die jeweils als Energiespeicher konzipiert federelastisch nachgiebig ausgebildet sind und im Funktions- oder Betriebszustand zumindest punktuell in radialem Kontakt mit der Innenseite (73) des Ring- oder Hülsenkörpers (68) sind.

6. Sicherheits- und Identifizierungsvorrichtung nach einem der vorstehenden Ansprüche, **dadurch gekennzeichnet, dass** das der Filteraufnahme (15) zugehörige Detektorteil (60) mittels einer Halterung (70) elektrisch isoliert ist, die zusätzlich mindestens eine weitere Detektoreinrichtung (72) aufnimmt, wie einen Füllstandssensor (74).

7. Sicherheits- und Identifizierungsvorrichtung nach einem der vorstehenden Ansprüche, **dadurch gekennzeichnet, dass** das eine dem jeweiligen Filterelement (14) zugehörige Detektorteil (58) ein eigenständiges, vom jeweiligen Filterelement (14) eines Filterelementtyps unabhängiges Bauteil darstellt, das separat handhabbar ist oder einen integralen Bestandteil des jeweiligen Filterelementes (14) eines Filterelementtyps ausbildet.

8. Filterelement (14) mit einem filternden Elementmaterial (16), das sich zwischen zwei Endkappen (18, 20) erstreckt und als handelbare Baueinheit konzipiert ist, **dadurch gekennzeichnet, dass** zumindest Teile einer Sicherheits- und Identifizierungsvorrichtung nach einem der vorstehenden Ansprüche integraler Bestandteil des Filterelementes (14) sind, dass eine Kontaktierung unter Verwendung einer Codierung erfolgt, die in Zusammenwirken von zwei Detektorteilen (58, 60), mittels einer Auswerteeinrichtung decodierbar, das Ergebnis der Zugehörigkeit oder Nicht-Zugehörigkeit liefert, und dass das eine dem jeweiligen Filterelement (14) zugehörige Detektorteil (58) aus einem, vorzugsweise umfangsseitig geschlossenen, Ring- oder Hülsenkörper (68) besteht, der auf seiner Innenseite (73) die Codierung aufweist, die im Funktions- oder Betriebszustand in federelastisch nachgiebigem Kontakt mit einer Außenseite des anderen Detektorteils (60) der Elementaufnahme (15) ist, das insoweit in das eine Detektorteil (58) über dessen freie Stirnseite eingreift.

9. Set, zumindest bestehend aus mindestens einem qualifizierten Filterelement (14) eines vorgebbaren Filterelementtyps und einem ein eigenständiges, vom Filterelement (14) unabhängiges Bauteil bildendes Detektorteil (58), das dem jeweiligen Filterelement (14) zugeordnet ring- oder hülsenförmig ausgebildet eine Codierung trägt und koppelbarer Bestandteil einer Sicherheits- und Identifizierungsvorrichtung nach einem der Ansprüche 1 bis 7 ist.

## Claims

1. Security and identification device for verifying whether a qualified filter element type having its filter elements (14) matches an element retainer (15) assigned to said filter element type, comprising electrical contact between detector parts (58, 60) of a detector apparatus (56), one detector part (58) of which matches each filter element (14) of a filter element type, and the other detector part (60) of which matches the element retainer (15), wherein, to establish the contact, the two detector parts (58, 60) are made to at least partly overlap by means of an axial travel movement, wherein the electrical contact between the two detector parts (58, 60) is releasably established transversely or substantially transversely to the axial travel movement in a resiliently flexible manner by means of at least one energy store, and wherein the contact is established using an encoding which, when decoded by means of an evaluation apparatus during the interaction of the two detector parts (58, 60), delivers the result of whether or not there is a match, **characterised in that** the detector part (58) matching each filter element (14) consists of a ring or sleeve body (68) which is preferably closed circumferentially and which has the encoding on its inside (73), said encoding being in resiliently flexible contact with an outside of the other detector part (60) of the element retainer (15) in the functional or operational state, said other detector part thus engaging in the first detector part (58) by means of the free end face thereof.

2. Security and identification device according to claim 1, **characterised in that** different electrical resistances among the detector parts (58, 60) are used for the encoding.

3. Security and identification device according to claim 1 or claim 2, **characterised in that** an electrical resistance range, having preferably predefined threshold values, is specified as the associated encoding for each filter element type.

4. Security and identification device according to any of the preceding claims, **characterised in that** the inside (73) of the ring or sleeve body (68) has materials whose conductivities are different from the first detector part (58), in order to implement different electrical resistances in the context of the encoding.

5. Security and identification device according to claim 4, **characterised in that** the other detector part (60) of the filter element retainer (15) has at least one, preferably two, electrically conductive contact clips (66), which are each formed to be resiliently flexible as energy stores and which are in radial contact with at least some points of the inside (73) of the ring or sleeve body (68) in the functional or operational state.

6. Security and identification device according to any of the preceding claims, **characterised in that** the detector part (60) matching the filter retainer (15) is electrically insulated by means of a mount (70) which additionally receives at least one further detector apparatus (72) such as a level sensor (74).

7. Security and identification device according to any of the preceding claims, **characterised in that** the detector part (58) matching each filter element (14) either constitutes a standalone component which is independent of each filter element (14) of a filter element type and can be handled separately, or forms an integral component part of each filter element (14) of a filter element type.

8. Filter element (14) comprising a filtering element material (16), said filter element extending between two end caps (18, 20) and being configured as a saleable assembly, **characterised in that** at least parts of a security and identification device according to any of the preceding claims are an integral component part of the filter element (14), **in that** contact is established using an encoding which, during the interaction of two detector parts (58, 60), can be decoded by means of an evaluation apparatus and delivers the result of whether or not there is a match, and **in that** the detector part (58) matching each filter element (14) consists of a ring or sleeve body (68) which is preferably closed circumferentially and which has the encoding on its inside (73), said encoding being in resiliently flexible contact with an outside of the other detector part (60) of the element retainer (15) in the functional or operational state, said other detector part thus engaging in the first detector part (58) by means of the free end face thereof.

9. Set consisting at least of at least one qualified filter element (14) of a predeterminable filter element type and a detector part (58), which forms a standalone component independent of the filter element (14), is assigned to the relevant filter element (14), is formed in an annular or sleeve-like manner, bears an encoding and is a couplable component part of a security and identification device according to any of claims 1 to 7.

## Revendications

1. Dispositif de sécurité et d'identification pour vérifier si un type qualifié d'élément de filtre appartient, par son élément (14) de filtre, à un logement (15) d'élément, qui lui appartient, comprenant une mise en contact électrique entre des parties (58, 60) de détecteur d'un dispositif (56) de détecteur, dont une partie (58) de détecteur appartient à l'élément (14) respectif de filtre d'un type d'élément de filtre et l'autre partie (60) de détecteur au logement (15) d'élément, dans lequel, pour la mise en contact, les deux parties (58, 60) de détecteur sont mises à recouvrement l'une avec l'autre au moins en partie au moyen d'un mouvement axial de déplacement, dans lequel, au moyen d'au moins un accumulateur d'énergie, on produit, d'une manière pouvant être redéfaite d'une manière cédant élastiquement, la mise en contact électrique entre les deux parties (58, 60) de détecteur transversalement ou sensiblement transversalement au mouvement axial de déplacement, et dans lequel la mise en contact s'effectue en utilisant un codage, qui, en coopération avec les deux parties (58, 60) de détecteur, décodé au moyen d'un dispositif d'évaluation, donne le résultat de l'appartenance ou de la non appartenance, **caractérisé**
**en ce que** la une partie (58) de détecteur, appartenant à l'élément (14) respectif de filtre, est constituée d'un corps (68) annulaire ou en manchon, de préférence fermé du côté du pourtour, qui a, sur sa face (73) intérieure, le codage, qui est, dans l'état de fonctionnement ou de service, en contact cédant élastiquement à la manière d'un ressort avec une face extérieure de l'autre partie (60) de détecteur du logement (15) d'élément, qui, dans cette mesure, pénètre dans la une partie (58) de détecteur par son côté frontal libre.

2. Dispositif de sécurité et d'identification suivant la revendication 1,
**caractérisé en ce que** l'on utilise, pour le codage, des résistances électriques entre les parties (58, 60) de détecteur.

3. Dispositif de sécurité et d'identification suivant la revendication 1 ou 2,
**caractérisé en ce qu'**il est prescrit, pour chaque type d'élément de filtre, comme codage d'appartenance, une partie électrique de résistance ayant des valeurs de référence données à l'avance, de préférence de manière définie.

4. Dispositif de sécurité et d'identification suivant l'une des revendications précédentes,
**caractérisé en ce que** la face (73) intérieure du corps (68) annulaire ou en manchon a des matériaux conducteurs différents de la une partie (58) de détecteur en vue de réaliser des résistances électriques différentes dans le cadre du codage.

5. Dispositif de sécurité et d'identification suivant la revendication 4,
**caractérisé en ce que** l'autre partie (60) de détecteur du au moins un logement (15) d'élément de filtre a au moins un, de préférence deux étriers (66) de contact conducteurs de l'électricité, qui sont constitués de manière à pouvoir céder élastiquement à la manière d'un ressort en étant conçus respectivement comme accumulateur d'énergie et qui, à l'état de fonctionnement ou de service, sont, au moins ponctuellement, en contact radial avec la face (73) inférieure du corps (68) annulaire ou en manchon.

6. Dispositif de sécurité et d'identification suivant l'une des revendications précédentes,
**caractérisé en ce que** la partie (60) de détecteur appartenant au logement (15) de filtre est isolée électriquement au moyen d'une fixation (70), qui reçoit en outre un autre dispositif (72) de détecteur, comme un détecteur (74) de niveau.

7. Dispositif de sécurité et d'identification suivant l'une des revendications précédentes,
**caractérisé en ce que** la une partie (58) de détecteur appartenant à l'élément (14) respectif de filtre représente une pièce autonome indépendante de l'élément (14) respectif de filtre dans un type d'élément de filtre, qui peut être manipulé séparément ou qui constitue un constituant d'une seule pièce de l'élément (14) respectif de filtre d'un type d'élément de filtre.

8. Elément (14) de filtre comprenant un matériau (16) d'élément filtrant, qui s'étend entre deux coiffes (18, 20) d'extrémité et qui est conçu comme unité de construction pouvant être manipulée, **caractérisé en ce qu'**au moins des parties d'un dispositif de sécurité et d'identification suivant l'une des revendications précédentes font intégralement partie de l'élément (14) de filtre,
**en ce qu'**une mise en contact a lieu en utilisant un codage, qui, pouvant être décodé en coopération de deux parties (58, 60) de détecteur au moyen d'un dispositif d'évaluation, donne le résultat de l'appartenance ou de la non appartenance, et
**en ce que** la une partie (58) de détecteur, appartenant à l'élément (14) respectif de filtre, est constituée d'un corps (68) annulaire ou en manchon, de préférence fermé du côté du pourtour, qui a, sur sa face (73) intérieure, le codage, qui, dans l'état de fonctionnement ou de service, est en contact cédant élastiquement à la manière d'un ressort avec une face extérieure de l'autre partie (60) de détecteur du logement (15) d'élément, qui, dans cette mesure, pénètre dans la une partie (58) de détecteur par son côté frontal libre.

9. Ensemble, constitué au moins d'au moins un élément (14) qualifié de filtre d'un type d'élément de filtre pouvant être donné à l'avance et d'une partie (58) de détecteur autonome, formant une pièce indépendante de l'élément (14) de filtre, qui porte un codage constitué de manière annulaire ou en manchon affecté à l'élément (14) respectif de filtre et est une partie constitutive pouvant être connectée d'un dispositif de sécurité et d'identification suivant l'une des revendications 1 à 7.
